(19) Europäisches Patentamt
European Patent Office
Office européen des brevets

(11) **EP 2 759 394 A1**

(12) **EUROPÄISCHE PATENTANMELDUNG**

(43) Veröffentlichungstag:
30.07.2014  Patentblatt 2014/31

(21) Anmeldenummer: 13153024.8

(22) Anmeldetag: **29.01.2013**

(51) Int Cl.:
*B29C 70/66* (2006.01)    *B32B 5/18* (2006.01)
*B32B 5/20* (2006.01)    *B32B 27/20* (2006.01)
*B32B 27/32* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Akzenta Paneele + Profile GmbH**
**56759 Kaisersesch (DE)**

(72) Erfinder: **Hannig, Hans-Jürgen**
**51427 Bergisch Gladbach (DE)**

(74) Vertreter: **Michalski Hüttermann & Partner**
**Patentanwälte**
**Speditionstraße 21**
**40221 Düsseldorf (DE)**

(54) **Trägerplatte für Dekorpaneel**

(57)    Die vorliegende Erfindung betrifft eine Trägerplatte für ein Dekorpaneel. Insbesondere betriff die vorliegende Erfindung die Verwendung einer teilgeschäumten Kunststoffplatte auf Basis eines füllstoffadditivierten Polyolefins als Trägerplatte zur Herstellung eines Dekorpaneels, ein Verfahren zur Herstellung einer solchen Platte und deren Verwendung als Trägerplatte in einem Dekorpaneel.

EP 2 759 394 A1

**Beschreibung**

Die vorliegende Erfindung betrifft eine Trägerplatte für ein Dekorpaneel. Insbesondere betriff die vorliegende Erfindung die Verwendung einer teilgeschäumten Kunststoffplatte auf Basis eines füllstoffadditivierten Polyolefins als Trägerplatte zur Herstellung eines Dekorpaneels.

Unter dem Begriff Dekorpaneel sind im Sinne der Erfindung Wand-, Decken, oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe sind Holzart wie z.B. Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Nachdem gegebenenfalls noch auf der dem Dekorpapier gegenüberliegenden Seite der Trägerplatte ein Gegenzugpapier aufgebracht wurde, wird der erhaltene Schichtenaufbau unter Verwendung geeigneter druck- und/oder wärmeaktivierter Klebemittel fest miteinander verbunden.

In Anhängigkeit des gewünschten Einsatzbereiches der Dekorpaneele können diese aus unterschiedlichen Materialen gefertigt sein. Insbesondere kann dabei das Material des Trägers in Abhängigkeit des Einsatzbereichs gewählt sein. So kann der Träger beispielsweise aus einem Holzwerkstoff bestehen, sofern das Dekorpaneele keiner übermäßigen Feuchtigkeit oder Witterungsbedingungen ausgesetzt ist. Soll das Paneel hingegen z.B. in Feuchträumen oder im Außenbereich eingesetzt werden, kann der Träger beispielsweise aus einem Kunststoff bestehen.

Kunststoffe, welche bei der Herstellung entsprechender Paneele eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Zur Aufbringung eines Dekors auf die Trägerplatte bzw. einen plattenförmigen Träger ist es bekannt, ein mit einem entsprechenden Dekor bedrucktes Dekorpapier auf den plattenförmigen Träger aufzubringen, z.B. mittels einer zuvor auf den plattenförmigen Träger aufgebrachten Harzschicht als Verbindungsmittel. Darüber hinaus ist es bekannt, Dekorpaneele im sogenannten Direktdruck mit einem Dekor zu versehen.

Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Im Sinne der Erfindung sind unter dem Begriff Faserwerkstoffe Materialien wie z.B. Papier und Vliese auf Basis pflanzlicher, tierische, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern, Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind aus Mineralwolle oder Glaswolle.

Zum Schutz der aufgebrachten Dekorschicht sind in der Regeln Verschleiß- oder Deckschichten oberhalb der Dekorschicht aufgebracht. Eine Verschleiß- und/oder Deckschicht im Sinne der Erfindung ist eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen, wie beispielsweise Abrieb, schützt.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Um die Anwendungsbereiche der genannten Dekorpaneele insbesondere in Feuchträumen oder im Außenbereich zu erweitern wurden in letzter Zeit neben Trägern auf Basis von Holzwerkstoffen als Werkstoff für die plattenförmigen Träger auch vermehrt Kunststoffe als Werkstoff für solche Träger eingesetzt. Solche Paneele sind beispielsweise aus der Internationalen Patentanmeldung WO 2010/023042A1 bekannt. Ein Nachteil dieser plattenförmigen Träger ist es, dass für die plattenförmigen Träger eingesetzte Kunststoff, wie z.B. insbesondere Polyvinylchlorid (PVC), verstärkt im Fokus öffentlicher Kritik, da sie ein aus ökologischer Sicht relevantes Problempotential beinhalten können. So müssen beispielsweise zur Herstellung von Weich-PVC Weichmacher, z.B. aus der Gruppe der Phthalate, in einer Menge von 20-30 Gew.-% zugesetzt werden, um die gewünschte Elastizität des PVC-Materials zu gewährleisten. Derartige Zusatzstoffe werden jedoch im Zuge neuerer gesetzlicher Regelungen kritisch bewertet, warum der Einsatz solcher Stoffe versucht wird zu vermeiden.

Dies berücksichtigend ist es die Aufgabe der vorliegenden Erfindung, ein Dekorpaneel auf Basis einen Kunststoffträgers anzugeben, welches die aus dem Stand der Technik bekannten Probleme zu überwinden vermag. Darüber hinaus ist es eine Aufgabe der vorliegenden Erfindung, ein Verfahren zur kostengünstigen Herstellung eines entsprechenden Dekorpaneels anzugeben.

Gelöst wir diese Aufgabe durch ein Dekorpaneel gemäß Anspruch 1 sowie ein Verfahren gemäß Anspruch 10. Ausgestaltungen der Erfinden sich in den abhängigen Ansprüchen sowie der weiteren Beschreibung.

Mit der Erfindung wird eine Dekorpaneelträgerplatte auf Basis eines thermoplastischen Kunststoffs, welche **dadurch gekennzeichnet, dass** die Platte aus einen Rohmaterial hergestellt ist, welches neben dem thermoplastischen Kunststoff einen Füllstoff und einen Porenbildner aufweist und wobei der Füllstoffanteil im Rohmaterial zwischen $\geq$ 10 Gew.-% und $\leq$ 60 Gew.-%, vorzugsweise zwischen $\geq$ 20 Gew.-% und $\leq$ 45 Gew.-% beträgt und die Trägerplatte einen Porenanteil zwischen $\geq$ 10 Gew.-% und $\leq$ 45 Gew.-% aufweist, wobei der Porenanteil berechnet wird nach der Formel I

$$100 - \frac{\rho_{Platte}}{\rho_{Rohmaterial}} * 100 \qquad\qquad (I)$$

wobei $\rho_{Platte}$ der Rohdichte in kg/m$^3$ der Dekorpaneelträgerplatte und $\rho_{Rohmaterial}$ der Rohdichte in kg/m$^3$ des Rohmaterials entspricht.

Überraschender Weise hat sich gezeigt, dass eine die genannten Merkmale ausweisende Trägerplatte in hervorragender Weise zur Herstellung von Dekorpaneelen geeignet ist. Dabei erfüllt eine solche Trägerplatte zum einen die mechanischen, optischen, akustischen und haptischen Ansprüche zur Herstellung eines Dekorpaneels, zum anderen ist eine solche Trägerplatte preisgünstig bereitstellbar, was eine wirtschaftliche Voraussetzung zur Nutzung im wettbewerbsstarken Bereich der Dekorpaneelherstellung ist. Dabei hat sich insbesondere gezeigt, dass teilgeschäumte Trägerplatten bei einem Porenanteil zwischen $\geq$ 10 Gew.-% und $\leq$ 45 Gew.-% eine ausreichende mechanische Belastbarkeit für die Anwendung als Fussbodenplatte aufweisen, selbst wenn die Oberfläche nur noch mit einer dünnen Beschichtung im Bereich $\leq$ 0,2mm Schichtdicke versehen wird.

Insbesondere zeichnet sich eine erfindungsgemäße Dekorpaneelträgerplatte dadurch aus, dass ein unter Verwendung der erfindungsgemäßen Trägerplatte hergestelltes Dekorpaneel einen Resteindruck gemäß DIN EN 649 von $\leq$ 0,05mm, vorzugsweise $\leq$ 0,01mm aufweist. Darüber hinaus besteht eine unter Verwendung einer erfindungsgemäßen Trägerplatte hergestellte Dekorpaneele einen Kugelfalltest gemäß DIN EN 438 aus einer Höhe $\geq$ 1000mm, vorzugsweise $\geq$ 1400mm. Auch zeigt ein unter Verwendung einer erfindungsgemäßen Trägerplatte hergestelltes Dekorpaneel eine Eindringtiefe $\leq$ 0,15mm bei einem an die DIN EN 438 angelehnten Falltest aus 600mm Höhe mit einer Stahlkugel mit einem Gewicht von 224g. Darüber hinaus zeigen unter Verwendung einer erfindungsgemäßen Trägerplatte hergestellte Dekorpaneele aufgrund des Porenanteils eine gute Trittschalldämmung bei der Verwendung entsprechender Dekorpaneele als Bodenbelag.

Gemäß einer Ausgestaltung der Erfindung weist die Trägerplatte einen mittleren Porendurchmesser $d_{50}$ zwischen $\geq$ 20$\mu$m und $\leq$ 150$\mu$m, vorzugsweise zwischen $\geq$ 30$\mu$m und $\leq$ 120$\mu$m, noch bevorzugter zwischen $\geq$ 40$\mu$m und $\leq$ 90$\mu$m auf. Es hat sich gezeigt, dass der Porendurchmesser der in der Trägerplatte durch den im Rohmaterial enthaltenen Porenbildner einen entscheidenden Einfluss auf die mechanischen Eigenschaften der unter Verwendung der erfindungsgemäßen Trägerplatte hergestellten Dekorpaneele besitzt.

Gemäß einer weiteren Ausgestaltung der Erfindung kann es vorgesehen sein, dass der thermoplastische Kunststoff in der Dekorpaneelträgerplatte zumindest ein substituiertes oder unsubstituiertes Polyolefin aufweist. Dabei ist unter dem Begriff substituiertes Polyolefin ein Sinne der Erfindung ein Alkyl-, Aryl-, Hetroaryl und/oder Halogensubstituiertes Polyolefin zu verstehen. Vorzugsweise weist der thermoplastische Kunststoff dabei ein Polyolefin auf, welches ausgewählt ist aus der Gruppe bestehend aus Polyvinylchlorid (PVC), Polyethylen (PE), Polypropylen (PP), Polyisobutylen (PIB), Polybutylen (PB) oder Mischungen oder Co-Polymere dieser.

Gemäß einer besonders bevorzugten Ausgestaltung der Erfindung ist der Kunststoff dabei im Wesentlichen frei von organischen Weichmachern, insbesondere frei von Weichmachern auf Phthalat-Basis, wie z.B. Diethylhexylphthalat (DEHP) oder Dioctylphthalat (DOP).

In einer bevorzugten Ausgestaltung der Erfindung ist es vorgesehen sein, dass der Füllstoff ausgewählt ist aus der Gruppe bestehend aus Kreide, Talkum, Kaolin, Kaolinit, Glimmer, Wollastonit, Dolimit, Baryt, Quarz, Bariumsulfat, Fluorit (Flussspat), Calciumsulfat (Gips), Titandioxid, Glas oder Mischungen dieser. Dabei kann der Füllstoff bevorzugt einen mittleren Korndurchmesser $d_{50} \leq 150\mu m$, vorzugsweise $\leq 100\mu m$, weiter bevorzugt $\leq 80\mu m$, noch bevorzugter $\leq 50\mu m$, insbesondere $\leq 10\mu m$, wie zum Beispiel zwischen $2\mu m$ und $4\mu m$ auf. Insbesondere ist es bevorzugt, dass der mittlere Korndurchmesser $d_{50}$ des Füllstoffes in einem Bereich zwischen 0,1 bis 1,5 x dem mittleren Porendurchmesser $d_{50}$ der Poren in der Dekorpaneelträgerplatte entspricht. Bei der Verwendung von Glas als Füllstoff kann dieses besonderes bevorzugt als Glasbruch und/oder Glasmehl und/oder in Form von Glasmikrokugeln eingesetzt werden. Gemäß einer bevorzugten Ausgestaltung der Erfindung weist der Füllstoff eine Mohshärte in einem Bereich zwischen $\geq 2,0$ und $\leq 7,0$, vorzugsweise zwischen $\geq 2,0$ und $\leq 4,0$ auf.

Der Anteil der geschlossenzelligen Poren in der Trägerplatte beträgt bevorzugt $\geq 50\%$, vorzugsweise $\geq 70\%$, noch bevorzugter $\geq 90\%$. Es hat sich gezeigt, dass insbesondere eine geschlossenzellige Porenstruktur zur Verbesserung der mechanischen Eigenschaften eines unter Verwendung einer erfindungsgemäßen Trägerplatte hergestellten Dekorpaneels beitragen kann.

Zur Ausbildung entsprechender Poren in der erfindungsgemäßen Trägerplatte sind dabei alle Mittel geeignet, die die Ausbildung von Poren entsprechender Porenstruktur und mit entsprechendem Porendurchmesser sicherstellen können. Insbesondere bevorzugt ist es dabei, dass als Porenbildner expandierende Mikrokugeln eingesetzt werden. Hierzu kann es vorgesehen sein, dass das Rohmaterial zur Herstellung der erfindungsgemäßen Dekorpaneelträgerplatten expandierbare Mikrokugeln aufweist, welche unter Wärmeeinwirkung expandieren. Solche Mikrokugeln können beispielsweise aus einem thermoplastischen Kunststoff bestehen und mit einem Kohlenwasserstoff gefüllt sein. Bei Einwirkung von Wärme expandiert das Volumen der Kugel aufgrund des sich im Inneren ausdehnenden Kohlenwasserstoffes um den Faktor 10 bis 90. Gemäß einer bevorzugten Ausgestaltung der Erfindung werden als Porenbildner expandierende Mikrokugeln eingesetzt, welche unter Wärmeeinwirkung eine Volumenexpansion zwischen 1000% und 4500%, vorzugsweise 2000% und 4000% aufweisen.

Gemäß einer weiteren Ausgestaltung der Erfindung kann es vorgesehenen, dass die Dekorpaneelträgerplatte aus Rohmaterial hergestellt ist, in welchem der Porenbildner in einer Konzentration zwischen $\geq 0,5$ Gew.-% und $\leq 5$ Gew.-%, bevorzugt $\geq 0,8$ Gew.-% und $\leq 2$ Gew.-%, besonders bevorzugt $\geq 1,0$ Gew.-% und $\leq 1,8$ Gew.-% enthalten ist.

Desweiteren kann die Dekorpaneelträgerplatte Hilfsstoffe wie Stabilisatoren und/oder Pigmente enthalten. Dabei können Stabilisatoren insbesondere zur Verbesserung der UV-Stabilität zugegeben werden. Auch kann es vorgesehen sein, dass das Paneel Flammschutzmittel wie beispielsweise polybromierte Diphenylether (PBDE), phosphorhaltige Verbindungen und/oder Aluminiumhydroxid ausweist.

Gemäß einer weiteren bevorzugten Ausgestaltung der Erfindung weißt die Dekorpaneelträgerplatte eine Dicht $\geq 800$ g/m$^3$ auf. Dabei ist die Dichte des Materials zum einen vorteilhaft hinsichtlich der mechanischen Eigenschaften der Trägerplatte, zum anderen hat die Dichte einen Einfluss auf das haptische Empfinden des Käufers, der ein schwereres Dekorpaneel als wertiger einschätzt.

Die vorliegende Erfindung betrifft darüber hinaus ein Verfahren zur Herstellung einer erfindungsgemäßen Dekorpaneelträgerplatte, aufweisend die Verfahrensschritte,

a) Mischen wenigstens eines granulierten thermoplastischen Basismaterials mit wenigstens einem Füllstoff und wenigstens einem Porenbildner;
b) Aufbringen des in Schritt a) hergestellten Rohmaterials auf eine Pressplatte oder Einbringen des Rohmaterials in einen Extruder;
c) Erwärmen des Rohmaterials auf eine Temperatur zwischen $\geq 80°C$ und $\leq 220°C$, vorzugsweise zwischen $\geq 80°C$ und $\leq 180°C$ und pressen des Rohmaterial bei einem Druck zwischen $\geq 0,5$ kN/cm$^2$ und $\leq 30$ kN/cm$^2$, vorzugsweise zwischen $\geq 1$ kN/cm$^2$ und $\leq 10$ kN/cm$^2$ oder Kalandrieren der aus dem Extruder kommenden Polymermasse auf eine gewünschte Trägerplattendicke; und
d) Rückkühlen der Platte auf eine Temperatur $\leq 80°C$, vorzugsweise $\leq 70°C$, besonderes bevorzugt $\leq 50°C$,

zur Bereitstellung einer Dekorpaneelträgerplatte.

Gemäß einer bevorzugten Ausgestaltung des Verfahrens wird als Presse eine Doppelbandpresse oder eine Kurztaktpresse eingesetzt. Dabei ist es besonders bevorzugt, wenn die Pressflächen eine inerte, temperaturbeständige Kunststoffoberfläche, wie z.B. eine Polytetrafluorethylen-Oberfläche aufweisen.

Das Aufbringen des Rohmaterials auf eine Pressplatte kann erfindungsgemäß beispielsweise durch aufstreuen, aufschütten oder aufblasen auf eine Pressplatte erfolgen.

Dabei ist es insbesondere bevorzugt, wenn das Verfahren zur Herstellung einer Dekorpaneelträgerplatte als kontinuierliches oder semi-kontinuierliches Verfahren unter Verwendung einer Doppelbandpresse durchgeführt wird, bei welcher vor dem oder im Einlaufbereich der Presse das Rohmaterial an Gemisch aufgegeben wird, unter Wärmezufuhr gepresst und anschließend rückgekühlt wird, wobei die Rückkühlung vorzugsweise unter Druck, besonders bevorzugt unter Aufrechterhaltung des Pressdruckes, erfolgt. Die so hergestellten Endlosplatten werden anschließend auf ein Zwischenmaß oder das Endmaß der Dekorpaneele geschnitten. Ebenso kann es vorgesehen sein, dass die Dekorpaneelträgerplatten in der Presse bereits zumindest hinsichtlich eines Ebenenmaßes, also hinsichtlich der Länge oder der Breite, hergestellt werden, so dass die Trägerplatte nach dem Pressen nur noch abgelängt werden muss. Zur Erwärmung des Rohmaterials kann es vorgesehen sein, dass die zur Erwärmung eingesetzten Wärmeübertragungsmittel, wie z.B. Pressplatten, Pressbänder oder Extruder auf eine Temperatur oberhalb der zu erreichenden Temperatur des Rohmaterials erwärmt werden. Beispielsweise kann es vorgesehen sein, dass die Wärmeübertragungsmittel auf eine Temperatur zwischen $\geq$ 150°C und $\leq$ 300°C, vorzugsweise $\geq$ 250°C erwärmt werden.

Im Anschluss an die Herstellung der Trägerplatte kann bevorzugt eine direkte Weiterverarbeitung der Trägerplatte zum Dekorpaneel erfolgen, wobei vorzugsweise unter Verwendung eines Direktdruckverfahrens oder einer Dekorfolienkaschierung ein Dekor auf die Trägerplatte direkt oder einen zuvor auf die Trägerplatte aufgebrachten Druckuntergrund erfolgt. Dabei ist es insbesondere bevorzugt, wenn das Dekor mittels eines Digitaldruckverfahrens, vorzugsweise unter Verwendung von strahlungshärtbaren Farben, aufgebracht wird. Dies erlaubt durch die kurze Trocknungs- bzw. Aushärtungszeit der Farbe eine hochintegrative Ausgestaltung des Herstellungsverfahrens, ausgehend vom Rohmaterial für die Dekorpaneelträgerplatte bis zum fertig dekorierten Paneel.

Desweiteren kann es vorgesehen sein, dass vor der Aufbringung der Dekorschicht ein Druckuntergrund auf den plattenförmigen Träger aufgebracht wird. Dabei kann es insbesondere vorgesehen sein, dass als Druckuntergrund eine Zusammensetzung aufgebracht wird, welche zum einen radikalisch härtende Bestandteile und zum anderen Polyurethananteile aufweist, wie dies beispielsweise aus Dual-Cure Lacksystemen bekannt ist. Dabei kann es insbesondere vorgesehen sein, dass der Druckuntergrund Urethanacrylate enthält. Darüber hinaus kann der Druckuntergrund insbesondere Pigmente, wie beispielsweise Titandioxid enthalten.

Dem Aufbringen des Dekors vor- oder nachgeschaltet kann eine Profilierung der Kanten vorgesehen sein, bei welcher mittels beispielsweise spanabhebender Verfahren funktionale und/oder Dekorative Profile zumindest entlang einer Kante der Trägerplatte eingebracht werden. Dabei können die funktionalen Profile derart ausgestaltet werden, dass mittels dieser einzelne Paneele lösbar miteinander verbinden lassen, um eine bei Verlegen eine verbundene Verlegefläche auszubilden. Dekorative Profile können beispielsweise zur Ausbildung einer V-Fuge oder Landhaus-Fuge zwischen zwei benachbarten Paneelen in der Verlegefläche eingebracht werden.

Desweiteren kann es erfindungsgemäß vorgesehen sein, dass auf das Dekor bzw. die das Dekor ausbildende Farbschicht eine Deck- und/oder Verschleißschutzschicht aufgebracht wird. Dabei kann es insbesondere vorgesehen sein, dass eine verschleißfeste Lackschicht, vorzugsweise auf Basis eines strahlungshärtbaren Lackes, auf die Dekorfarbschicht aufgebracht und getrocknet bzw. ausgehärtet wird. Auch dies unterstützt die Integration des Herstellungsverfahrens zu einem In-Line Fertigungsprozess an dessen Ende ein endfertiges Dekorpaneel steht. Zusammen mit der Dekorfarbschicht bzw. der Dekorfolie und/oder mit der Verschleißschutzschicht kann ein Gegenzug auf der dem Dekor gegenüberliegenden Seite der Trägerplatte aufgebracht werden, um einen Verzug des Paneels z.B. durch sogenanntes Schüsseln zu vermeiden. Dazu kann es insbesondere vorgesehen sein, dass eine Gegenzugfolie oder eine Lackschicht aufgebracht wird.

Desweiteren betrifft die Erfindung ein Dekorpaneel welches eine erfindungsgemäße Trägerplatte und eine auf zumindest einer Seite der Trägerplatte aufgebrachte Dekorschicht aufweist.

Gemäß einer bevorzugten Ausgestaltung der Erfindung weist das Dekorpaneel zwischen der Trägerplatte und der Dekorschicht, einen Druckuntergrund und/oder auf der Dekorschicht eine Deck- und/oder Verschleißschutzschicht und/oder auf der der Dekorschicht gegenüberliegenden Seite der Trägerplatte einen Gegenzug auf. Dabei kann es insbesondere vorgesehen sein, dass die Deck- und/oder Verschleißschutzschicht und/oder der Gegenzug aus einer strahlungshärtbaren, vorzugsweise transparenten oder transluzenten Zusammensetzung ausgebildet sind.

Gemäß einer weiteren Ausgestaltung der Erfindung kann es vorgesehen sein, dass das Dekorpaneel zumindest in einen Randbereich der Trägerplatte eine Profilierung aufweist. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird. Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

**Patentansprüche**

1. Dekorpaneelträgerplatte auf Basis eines thermoplastischen Kunststoffs, **dadurch gekennzeichnet, dass** die Platte aus einen Rohmaterial hergestellt ist, welches neben dem thermoplastischen Kunststoff einen Füllstoff und einen Porenbildner aufweist und wobei der Füllstoffanteil im Rohmaterial zwischen $\geq$ 10 Gew.-% und $\leq$ 60 Gew.-%, vorzugsweise zwischen $\geq$ 20 Gew.-% und $\leq$ 45 Gew.-% beträgt und die Trägerplatte einen Porenanteil zwischen $\geq$ 10 Gew.-% und $\leq$ 45 Gew.-% aufweist, wobei der Porenanteil berechnet wird nach der Formel I

$$100 - \frac{\rho_{Platte}}{\rho_{Rohmaterial}} * 100 \qquad (I)$$

wobei $\rho_{Platte}$ der Rohdichte in kg/m$^3$ der Dekorpaneelträgerplatte und $\rho_{Rohmaterial}$ der Rohdichte in kg/m$^3$ des Rohmaterials entspricht.

2. Dekorpaneelträgerplatte gemäß Anspruch 1, wobei die Trägerplatte einen mittleren Porendurchmesser $d_{50}$ zwischen $\geq$ 20$\mu$m und $\leq$ 150$\mu$m, vorzugsweise zwischen $\geq$ 30$\mu$m und $\leq$ 120$\mu$m, noch bevorzugter zwischen $\geq$ 40$\mu$m und $\leq$ 90$\mu$m aufweist.

3. Dekorpaneelträgerplatte gemäß einem der vorhergehenden Ansprüche, wobei der thermoplastische Kunststoff zumindest ein substituiertes oder unsubstituiertes Polyolefin aufweist.

4. Dekorpaneelträgerplatte gemäß einem der vorhergehenden Ansprüche, wobei der thermoplastische Kunststoff ein Polyolefin aufweist, welches ausgewählt ist aus der Gruppe bestehend aus Polyvinylchlorid (PVC), Polyethylen (PE), Polypropylen (PP), Polyisobutylen (PIB), Polybutylen (PB) oder Mischungen oder Co-Polymere dieser.

5. Dekorpaneelträgerplatte gemäß einem der vorhergehenden Ansprüche, wobei der Füllstoff ausgewählt ist aus der Gruppe bestehend aus Kreide, Talkum, Kaolin, Kaolinit, Glimmer, Wollastonit, Dolimit, Baryt, Quarz, Bariumsulfat, Fluorit (Flussspat), Calciumsulfat (Gips), Titandioxid, Glas oder Mischungen dieser.

6. Dekorpaneelträgerplatte gemäß einem der vorhergehenden Ansprüche, wobei der Füllstoff einen mittleren Korndurchmesser $d_{50} \leq$ 150$\mu$m, vorzugsweise $\leq$ 100$\mu$m, weiter bevorzugt $\leq$ 80$\mu$m, noch bevorzugter $\leq$ 50$\mu$m, insbesondere $\leq$ 10$\mu$m aufweist.

7. Dekorpaneelträgerplatte gemäß einem der vorhergehenden Ansprüche, wobei der Anteil der geschlossenzelligen Poren in der Trägerplatte $\geq$ 50%, vorzugsweise $\geq$ 70%, noch bevorzugter $\geq$ 90% beträgt.

8. Dekorpaneelträgerplatte gemäß einem der vorhergehenden Ansprüche, wobei die Trägerplatte aus einem Rohmaterial hergestellt wird, welches als Porenbildner expandierbare Mikrokugeln aufweist.

9. Dekorpaneelträgerplatte gemäß Anspruch 8, der Porenbildner im Rohmaterial in einer Konzentration zwischen $\geq$ 0,5 Gew.-% und $\leq$ 5 Gew.-%, bevorzugt $\geq$ 0,8 Gew.-% und $\leq$ 2 Gew.-%, besonders bevorzugt $\geq$ 1,0 Gew.-% und $\leq$ 1,8 Gew.-% enthalten ist.

10. Verfahren zur Herstellung einer Dekorpaneelträgerplatte nach einem der Ansprüche 1 bis 9, aufweisend die Verfahrensschritte,

    a) Mischen wenigstens eines granulierten und/oder pulverförmigen thermoplastischen Basismaterials mit wenigstens einem Füllstoff und wenigstens einem Porenbildner;
    b) Aufbringen des in Schritt a) hergestellten Rohmaterials auf eine Pressplatte oder Einbringen des Rohmaterials in einen Extruder;

c) Erwärmen des Rohmaterials auf eine Temperatur zwischen ≥ 80°C und ≤ 220°C, vorzugsweise zwischen ≥ 80°C und ≤ 180°C und pressen des Rohmaterial bei einem Druck zwischen ≥ 0,5 kN/cm$^2$ und ≤ 30 kN/cm$^2$, vorzugsweise zwischen ≥ 1 kN/cm$^2$ und ≤ 10 kN/cm$^2$ oder Kalandrieren der aus dem Extruder kommenden Polymermasse auf eine gewünschte Trägerplattendicke; und

d) Rückkühlen der Platte auf eine Temperatur ≤ 90°C, vorzugsweise ≤ 80°C, besonderes bevorzugt ≤ 70°C, zur Bereitstellung einer Dekorpaneelträgerplatte.

**11.** Verfahren gemäß Anspruch 10, wobei als Presse eine Doppelbandpresse oder eine Kurztaktpresse eingesetzt wird.

**12.** Dekorpaneel, aufweisend eine Trägerplatte gemäß einem der Ansprüche 1 bis 9 und eine auf zumindest einer Seite der Trägerplatte aufgebrachte Dekorschicht.

**13.** Dekorpaneel gemäß Anspruch 12, wobei diese zwischen der Trägerplatte und der Dekorschicht, einen Druckuntergrund und/oder auf der Dekorschicht eine Deck- und/oder Verschleißschutzschicht und/oder auf der der Dekorschicht gegenüberliegenden Seite der Trägerplatte einen Gegenzug aufweist.

**14.** Dekorpaneel gemäß einem der Ansprüche 12 und 13, wobei die Deck- und/oder Verschleißschutzschicht und/oder der Gegenzug aus einer strahlungshärtbaren, vorzugsweise transparenten oder transluzenten Zusammensetzung gebildet ist.

**15.** Dekorpaneel dieses zumindest in einen Randbereich des plattenförmigen Trägers eine Profilierung aufweist und wobei die Profilierung derart ausgestaltete ist, dass mehrere Dekorpaneele mittels korrespondierender Profile miteinander lösbar verbindbar sind.

EP 2 759 394 A1

Europäisches
Patentamt

European
Patent Office

Office européen
des brevets

**EUROPÄISCHER RECHERCHENBERICHT**

Nummer der Anmeldung

EP 13 15 3024

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 502 726 A1 (BEHR GMBH & CO KG [DE]) 2. Februar 2005 (2005-02-02) * Absätze [0020] - [0021], [0024] - [0025], [0027], [0048] - [0049]; Ansprüche 1, 6, 14, 16-17, 21-23; Abbildungen 4, 5A, 5B * ----- | 1,2,5,6, 8,10 | INV. B29C70/66 B32B5/18 B32B5/20 B32B27/20 B32B27/32 |
| A | US 2012/276348 A1 (CLAUSI ROBERT N [CA] ET AL) 1. November 2012 (2012-11-01) * Ansprüche 1-4, 7-11; Abbildungen 1-5 * ----- | 1 | |

RECHERCHIERTE SACHGEBIETE (IPC)

B29C
B32B

Der vorliegende Recherchenbericht wurde für alle Patentansprüche erstellt

| Recherchenort | Abschlußdatum der Recherche | Prüfer |
|---|---|---|
| Den Haag | 23. August 2013 | Derz, Thomas |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 15 3024

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-08-2013

| Im Recherchenbericht angeführtes Patentdokument | Datum der Veröffentlichung | Mitglied(er) der Patentfamilie | Datum der Veröffentlichung |
|---|---|---|---|
| EP 1502726 A1 | 02-02-2005 | AT 421919 T<br>DE 10334875 A1<br>EP 1502726 A1 | 15-02-2009<br>24-02-2005<br>02-02-2005 |
| US 2012276348 A1 | 01-11-2012 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010023042 A1